# EUROPÄISCHE PATENTANMELDUNG

(11) **EP 3 020 625 A1**
(43) Veröffentlichungstag der Anmeldung: **18.05.2016**
(21) Anmeldenummer: 14193033.9
(22) Anmeldetag: 13.11.2014
(51) Int. Cl.: B63H 5/125, B63H 21/38, F01P 3/20

(54) **Elektrischer Gondelantrieb**

(71) Anmelder: Siemens Aktiengesellschaft, 80333 München (DE)
(72) Erfinder: Balzer, Christoph, 12163 Berlin (DE); Seibicke, Frank, 14822 Borkheide (DE)

(57) **Zusammenfassung**

Die Erfindung betrifft einen elektrischer Gondelantrieb für ein Schiff aufweisend ein Gondelgehäuse (1), welches drehbar mit einem Schiffsrumpf verbindbar ist, und einen im Gondelgehäuse (1) angeordneten Elektromotor (2). Ferner betrifft die Erfindung ein Schiff aufweisend einen derartigen elektrischen Gondelantrieb. Um eine alternative Kühlung für einen elektrischen Gondelantrieb bereitzustellen, wird vorgeschlagen, dass der elektrische Gondelantrieb zumindest einen im Gondelgehäuse (1) angeordneten Hohlraum (3), wobei der zumindest eine Hohlraum (3) jeweils bezüglich einer Motorachse (4) in axialer Richtung versetzt zum Elektromotor (2) angeordnet ist und wobei der zumindest eine Hohlraum (3) derart ausgestaltet ist, dass durch zumindest eine Gehäuseöffnung (5) Wasser in den zumindest einen Hohlraum (3) eindringen kann, welches den Gondelantrieb zumindest teilweise umgibt, zumindest einen Wärmetauscher (6), welcher jeweils im zumindest einen Hohlraum (3) angeordnet ist, und einen geschlossenen Kühlkreislauf (7) aufweist, welcher im Gondelgehäuse (1) verläuft, wobei der geschlossene Kühlkreislauf (7) derart ausgestaltet ist, dass Abwärme des Elektromotors (2) über ein im geschlossenen Kühlkreislauf (7) zirkulierendes Kühlmedium aufnehmbar ist und mittels des zumindest einen Wärmetauschers (6) an das im zumindest einen Hohlraum (3) befindliche Wasser abgebbar ist.

## Beschreibung

Die Erfindung betrifft einen elektrischen Gondelantrieb für ein Schiff aufweisend ein Gondelgehäuse, welches drehbar mit einem Schiffsrumpf verbindbar ist, und einen im Gondelgehäuse angeordneten Elektromotor. Ferner betrifft die Erfindung ein Schiff aufweisend einen derartigen elektrischen Gondelantrieb.

Ein derartiger elektrischer Gondelantrieb kommt beispielsweise als Antriebseinheit bei einem Schiff zum Einsatz, wobei sich der Gondelantrieb außerhalb des Schiffsrumpfes und unterhalb des Wasserspiegels, insbesondere im Meerwasser, befindet und einen Propeller antreibt. Derartige Gondelantriebe sind auch unter der Bezeichnung POD-Antriebe bekannt. In elektrischen Gondelantrieb entstehen, wie in jeder elektrischen Maschine, Verluste, die in Form von Wärme abgeführt werden müssen. Insbesondere kann dies nur teilweise über die Gondeloberfläche zum umgebenden Meerwasser erfolgen, so dass eine zusätzliche Kühlung benötigt wird.

Die zusätzliche Kühlung erfolgt zumeist über einen geschlossenen Kühlkreislauf durch den Antrieb, den Schaft und den Schiffsrumpf. D.h. für die Kühlung wird Bauraum im Schiffsrumpf benötigt. Entsprechend müssen die Kühlmittel in durch den Schaft und die Drehdurchführung geführt werden.

Aus der EP 0 590 867 A1 ist eine gondelförmige Schiffsantriebseinheit bekannt, wobei Kühlluft zur Kühlung eines in der Gondel angeordneten Elektromotors vorgesehen ist. Dabei wird die Kühlluft vom Schiffsrumpf aus in die Gondel geleitet, um den Elektromotor zu kühlen und anschließend wieder in den Schiffsrumpf geleitet zu werden.

Aus der DE 10 2010 039 609 A1 ist ein elektrischer Gondelantrieb mit einem in einem Unterwassergehäuse angeordneten elektrischen Motor bekannt, wobei zwischen einem Stator des elektrischen Motors und dem Unterwassergehäuse ein Raum ausgebildet ist, in welchem zur Kühlung des Motors eine Kühlflüssigkeit strömt. Der Raum ist für das das Unterwassergehäuse umströmende Wasser verschlossen, wobei eine Wärmeübertragung von dem Stator über die in dem Raum strömende Kühlflüssigkeit an das Unterwassergehäuse und von dort an das das Unterwassergehäuse umströmende Wasser erfolgt.

Aus der DE 877 254 C ist eine elektromotorische Antriebsvorrichtung für Propeller bei überfluteten Antriebsgondeln von Schiffen bekannt, wobei zwischen einem Motorgehäuse und dem Gondelgehäuse ein Ringkanal angeordnet ist, welcher von dem die Gondel überflutenden Wasser durchströmt werden kann, um eine gute Kühlung des Motors zu erhalten.

Der Erfindung liegt die Aufgabe zugrunde, eine alternative Kühlung für einen elektrischen Gondelantrieb bereitzustellen.

Diese Aufgabe wird durch einen elektrischen Gondelantrieb der eingangs genannten Art dadurch gelöst, dass der elektrische Gondelantrieb zumindest einen im Gondelgehäuse angeordneten Hohlraum, wobei der zumindest eine Hohlraum jeweils bezüglich einer Motorachse in axialer Richtung versetzt zum Elektromotor angeordnet ist und wobei der zumindest eine Hohlraum derart ausgestaltet ist, dass durch zumindest eine Gehäuseöffnung Wasser in den zumindest einen Hohlraum eindringen kann, welches den Gondelantrieb zumindest teilweise umgibt, zumindest einen Wärmetauscher, welcher jeweils im zumindest einen Hohlraum angeordnet ist, und einen geschlossenen Kühlkreislauf aufweist, welcher im Gondelgehäuse verläuft, wobei der geschlossene Kühlkreislauf derart ausgestaltet ist, dass Abwärme des Elektromotors über ein im geschlossenen Kühlkreislauf zirkulierendes Kühlmedium aufnehmbar ist und mittels des zumindest einen Wärmetauschers an das im zumindest einen Hohlraum befindliche Wasser abgebbar ist.

Weiterhin wird diese Aufgabe durch ein Schiff aufweisend zumindest einen derartigen elektrischen Gondelantrieb gelöst.

Der jeweilige Hohlraum ist ein Bereich des elektrischen Gondelantriebs bzw. des Gehäuses, in welchen das den Gondelantrieb zumindest teilweise umgebende Wasser eindringen kann. Dabei ist der jeweilige Hohlraum in axialer Richtung versetzt zum Elektromotor angeordnet. Insbesondere ist der jeweilige Hohlraum als Bilgenraum ausgestaltet.

Der Elektromotor kann beispielsweise als Asynchronmotor oder Synchronmotor ausgeführt sein und ist mittels des Kühlmediums kühlbar. Das Kühlmedium des geschlossenen Kühlkreislaufs kann flüssig, wie zum Beispiel Öl oder Wasser, oder gasförmig, wie zum Beispiel Luft, sein. Die während des Betriebs des Elektromotors entstehende Abwärme kann mittels des Kühlmediums zum zumindest einen Wärmetauscher transportiert werden, über welchen die Abwärme schließlich an das im zumindest einen Hohlraum befindliche Wasser abgegeben werden kann.

Zur Rückkühlung des Kühlmediums des elektrischen Gondelantriebs ist es somit nicht erforderlich, das Kühlmedium aus dem eigentlichen Gondelantrieb herauszuführen. Insbesondere ist es somit nicht mehr nötig, das Kühlmedium in den Schiffsrumpf zu leiten, um es dort rückzukühlen. Insbesondere verläuft der jeweilige geschlossene Kühlkreislauf ausschließlich innerhalb des Gondelgehäuses. Somit entfallen die Durchführungen durch den Schaft des elektrischen Gondelantriebs sowie durch die Drehdurchführung zwischen dem Schiffsrumpf und dem Gondelschaft. Daher ist die vorgeschlagene Kühlung des elektrischen Gondelantriebs technisch weniger aufwändig zu realisieren und gleichzeitig zuverlässiger, da das Kühlmedium nicht über anfällige Drehdurchführungen geleitet werden muss.

Dadurch, dass der jeweilige Hohlraum in axialer Richtung versetzt zum Elektromotor angeordnet ist, wird ein elektrischer Gondelantrieb ermöglicht, der in radialer Richtung vergleichsweise kompakt ausgestaltet ist. Somit kann das Gehäuse, das in radialer Richtung im Anschluss an den Elektromotor angeordnet ist vergleichsweise eng am Elektromotor anliegen, wobei gleichzeitig dennoch eine leistungsstarke Kühlung des Elektromotors gewährleistet wird.

Von Vorteil ist bei der vorgeschlagenen Kühlung weiterhin, dass der ansonsten erforderliche Bauraum für Rückkühlelemente im Schiffsrumpf anderweitig genutzt werden kann.

Weiterhin ergibt sich insbesondere bei einem Betrieb des Gondelantriebs in salzhaltigem Wasser als Vorteil, dass auf Kühlkanäle verzichtet werden kann, welche salzhaltiges Wasser direkt in den Elektromotor zu dessen Kühlung hineinführen. Mittels des Wärmetauschers kann somit die Langlebigkeit des elektrischen Gondelantriebs und insbesondere des Elektromotors erhöht werden.

Vorzugsweise ist eine Strömungsmaschine vorgesehen, mittels welcher das Kühlmedium im geschlossenen Kühlkreislauf umwälzbar ist.

Bei einer vorteilhaften Ausgestaltung der Erfindung ist der jeweilige Hohlraum zwischen einer jeweiligen axialen Stirnseite des Elektromotors und einer jeweiligen axialen Stirnseite des Gondelgehäuses angeordnet, in welche die jeweilige axiale Stirnseite des Elektromotors weist.

Beispielsweise kann das Gondelgehäuse mehrere Abteile aufweisen, wobei der Elektromotor in einem der Abteile und der jeweilige Hohlraum in einem anderen der Abteile untergebracht ist. Dabei kann der jeweilige Hohlraum in einem Abteil angeordnet sein, welches mittels einer fluiddichten Zwischenwand vom Elektromotor bzw. dessen Abteil abgetrennt ist.

Um Strömungsverluste zu verringern, kann die jeweilige axiale Stirnseite des Gondelgehäuses beispielsweise eine im Wesentlichen konusförmige oder kegelstumpfförmige Spitze aufweisen. Zusätzlich kann vorgesehen sein, dass an der jeweiligen Spitze ein Propeller angeordnet ist, der mittels des Elektromotors antreibbar ist.

Bei einer weiteren vorteilhaften Ausgestaltung der Erfindung weist der elektrische Gondelantrieb eine Antriebswelle und einen drehfest mit der Antriebswelle verbundenen Propeller auf, wobei der jeweilige Hohlraum die jeweilige Antriebswelle in Umfangsrichtung zumindest entlang des halben Umfangs umschließt.

Ein derartig ausgestalteter, jeweiliger Hohlraum kann beispielsweise zwischen einer ersten Gehäuseöffnung unten im Gehäuse und einer zweiten Gehäuseöffnung oben im Gehäuse angeordnet sein. Dadurch dringt kaltes Wasser von unten durch die erste Gehäuseöffnung in den jeweiligen Hohlraum ein, wird mittels des jeweiligen Wärmetauschers erwärmt und steigt auf, um schließlich den Hohlraum und das Gehäuse über die zweite Gehäuseöffnung zu verlassen. Somit erlaubt der jeweilige Hohlraum eine gute Wärmeabfuhr, indem eine Konvektion des im Hohlraum befindlichen Wassers begünstigt wird. Zusätzlich oder alternativ können die erste Gehäuseöffnungen und die zweite Gehäuseöffnungen derart angeordnet und/oder ausgestaltet werden, dass während des Betriebs des elektrischen Gondelantriebs eine Strömung des den Gondelantrieb umgebenden Wassers mittels Umlenkelementen in den jeweiligen Hohlraum hinein bzw. heraus gelenkt wird.

Vorzugsweise ist die Antriebswelle dabei mittels einer Trennwand von dem in dem jeweiligen Hohlraum befindlichen Wasser abgetrennt und geschützt.

Insbesondere kann auch vorgesehen sein, dass der jeweilige Hohlraum die Antriebswelle in Umfangsrichtung komplett umschließt. Dies ermöglicht beispielsweise drehfest mit der Antriebswelle verbundene Propellerblätter innerhalb des Hohlraums anzuordnen, mittels welchen das im jeweiligen Hohlraum befindliche Wasser umgewälzt werden kann, so dass ein besonders guter Abtransport der Wärme aus dem jeweiligen Wärmetauscher gewährleistet werden kann.

Bei einer weiteren vorteilhaften Ausgestaltung der Erfindung weist der Wärmetauscher dabei zumindest ein Rohr auf, welches die Antriebswelle in Umfangsrichtung jeweils vollständig umschließt.

Das zumindest eine Rohr ist dabei zumindest teilweise in dem jeweiligen Hohlraum angeordnet, so dass es in thermischem Kontakt mit dem in dem jeweiligen Hohlraum befindlichen Wasser ist.

Vorzugsweise umschließt der jeweilige Hohlraum die Antriebswelle dabei in Umfangsrichtung vollständig. Insbesondere im Zusammenspiel mit drehfest mit der Antriebswelle verbundenen Propellerblättern innerhalb des Hohlraums kann somit eine besonders gute Wärmeabfuhr aus dem Wärmetauscher erreicht werden.

Bei einer weiteren vorteilhaften Ausgestaltung der Erfindung weist der Elektromotor einen Stator auf, wobei der geschlossene Kühlkreislauf zumindest einen Statorkanal umfasst, welcher jeweils zumindest abschnittsweise am Stator anliegt und/oder jeweils zumindest abschnittsweise im Stator angeordnet ist.

Der jeweilige Statorkanal kann sich beispielsweise in axialer oder in Umfangsrichtung am und/oder im Stator erstrecken, wodurch ein besonders guter Wärmetransfer vom Stator an das im geschlossenen Kühlkreislauf zirkulierende Kühlmedium gewährleistet wird. Beispielsweise kann der jeweilige Statorkanal als Bohrung im Stator ausgestaltet sein. Alternativ oder zusätzlich kann der jeweilige Statorkanal auch als von radial außen eingebrachte Nut ausgestaltet sein und/oder schraubenbahnförmig oder mäanderförmig an der radialen Außenfläche des Stators angeordnet sein. Vorzugsweise wird das Kühlmedium mittels eines Hohlprofils gegenüber dem Stator eingefasst. Bei einer weiteren vorteilhaften Ausgestaltung der Erfindung weist der Elektromotor einen drehbar gelagerten Rotor und eine drehfest mit dem Rotor verbundene Antriebswelle auf, wobei der geschlossene Kühlkreislauf zumindest einen Rotorkanal umfasst, welcher jeweils zumindest abschnittsweise am Rotor anliegt und/oder jeweils zumindest abschnittsweise im Rotor angeordnet ist, und wobei der jeweilige Wärmetauscher drehfest mit der Antriebswelle verbunden ist.

Während des Betriebs des Elektromotors kann auch im Rotor eine beträchtliche Verlustwärme entstehen, welche ebenfalls geeignet abgeführt werden muss. Dies ist insbesondere bei fremderregten oder Käfigläufermaschinen der Fall. Um auch für den drehbaren Rotor eine ausreichende Kühlleistung zur Verfügung stellen zu können, ist zumindest ein Rotorkanal vorgesehen, mittels welchem die Abwärme des Rotors an das im jeweiligen Rotorkanal befindliche Kühlmedium abgegeben werden kann.

Der jeweilige Rotorkanal kann sich beispielsweise in axialer oder in Umfangsrichtung am und/oder im Rotor erstrecken, wodurch ein besonders guter Wärmetransfer vom Rotor an das im geschlossenen Kühlkreislauf zirkulierende Kühlmedium gewährleistet wird. Beispielsweise kann der jeweilige Rotorkanal als Bohrung im Rotor ausgestaltet sein. Alternativ oder zusätzlich kann der jeweilige Rotorkanal auch als von radial innen in den magnetisch aktiven Rotorkörper eingebrachte Nut ausgestaltet sein und/oder schraubenbahnförmig oder mäanderförmig an der radialen Innenseite des Rotors angeordnet sein. Vorzugsweise wird das Kühlmedium mittels eines Hohlprofils gegenüber dem Rotor eingefasst.

Beispielsweise kann die Antriebswelle zumindest abschnittsweise als Stegwelle ausgeführt werden oder axial verlaufende Nuten aufweisen, wobei in der Lücke zwischen zwei in Umfangsrichtung benachbarten Stegen bzw. Nuten Teile des geschlossenen Kühlkreislaufes angeordnet sind. Insbesondere kann derart eine Verbindung der Rotorkanäle mit dem jeweiligen Wärmetauscher hergestellt werden.

Durch die drehfeste Verbindung des jeweiligen Wärmetauschers mit der Antriebswelle kann eine besonders gute Umwälzung des im jeweiligen Hohlraum befindlichen Wassers erreicht werden. Dies gewährleistet einen guten Wärmetransfer vom Wärmetauscher zu dem Wasser.

Prinzipiell kann der geschlossene Kühlkreislauf auch derart ausgestaltet sein, dass sowohl zumindest einen Statorkanal und zumindest einen Rotorkanal vorgesehen sind. Denkbar ist auch, für den zumindest einen Statorkanal und den zumindest einen Rotorkanal separate, geschlossene Kühlkreislauf mit zumindest einem jeweiligen Wärmetauscher vorzusehen, welche in einem Hohlraum oder mehreren Hohlräumen angeordnet ist bzw. sind.

Vorzugsweise ist der vorgeschlagene elektrische Gondelantrieb derart ausgelegt, dass er mit einer elektrischen Leistung von mehreren 100 kW, insbesondere mehreren Megawatt, betreibbar ist.

Im Folgenden wird die Erfindung anhand der in den Figuren dargestellten Ausführungsbeispiele näher beschrieben und erläutert. Es zeigen:

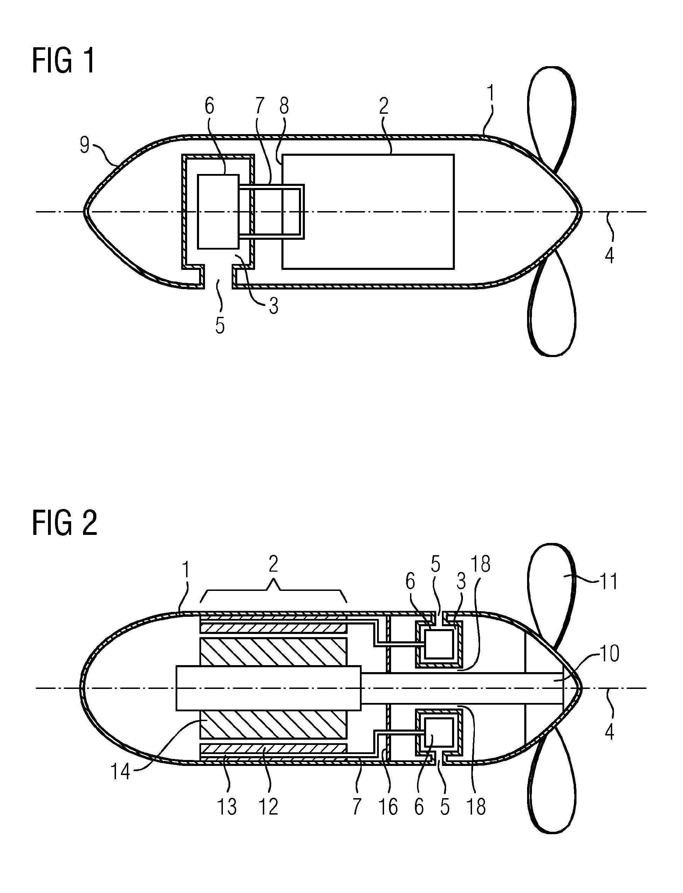

- FIG 1-4: ein erstes bis viertes Ausführungsbeispiel des erfindungsgemäßen elektrischen Gondelantriebs.

Figur 1 zeigt ein erstes Ausführungsbeispiel des erfindungsgemäßen elektrischen Gondelantriebs. Der elektrische Gondelantrieb weist ein Gondelgehäuse 1 auf, welches drehbar mit einem Schiffsrumpf verbindbar ist. Im Gondelgehäuse 1 sind ein Elektromotor 2 mit einer Motorachse 4 sowie ein Hohlraum 3 angeordnet, welcher bezüglich der Motorachse 4 in axialer Richtung versetzt zum Elektromotor 2 angeordnet ist. Der Hohlraum 3 ist zwischen einer axialen Stirnseite 8 des Elektromotors 2 und einer axialen Stirnseite 9 des Gondelgehäuses 1 angeordnet, in welche die axiale Stirnseite 8 des Elektromotors 2 weist. Der Hohlraum 3 ist dabei derart ausgestaltet, dass durch eine Gehäuseöffnung 5 Wasser in den Hohlraum 3 eindringen kann, welches den Gondelantrieb zumindest teilweise umgibt.

Ferner weist der Gondelantrieb einen geschlossenen, im Gondelgehäuse 1 verlaufenden Kühlkreislauf 7 sowie einen Wärmetauscher 6 auf, welcher im Hohlraum 3 angeordnet ist. Der geschlossene Kühlkreislauf 7 ist derart ausgestaltet, dass Abwärme des Elektromotors 2 über ein im geschlossenen Kühlkreislauf 7 zirkulierendes Kühlmedium aufnehmbar ist und mittels des Wärmetauschers 6 an das im Hohlraum 3 befindliche Wasser abgebbar ist.

Zum Antrieb des Schiffes, mit welchem der elektrische Gondelantrieb verbunden ist, kann der elektrische Gondelantrieb eine Antriebswelle und zumindest einen Propeller aufweisen, welche jeweils drehfest mit dem Elektromotor verbunden sind und welche aus Gründen der Übersichtlichkeit in Figur 1 nicht näher dargestellt sind. Beispielsweise kann das Gondelgehäuse 1 über einen nicht näher dargestellten Gondelschaft mit dem Schiffsrumpf verbunden sein.

Figur 2 zeigt ein zweites Ausführungsbeispiel des erfindungsgemäßen elektrischen Gondelantriebs. Gleiche Bezugszeichen wie in Figur 1 bezeichnen dabei gleiche Gegenstände. Da das zweite Ausführungsbeispiel Ähnlichkeiten mit dem ersten Ausführungsbeispiel aufweist, werden im Folgenden einige Unterschiede erläutert.

Der Elektromotor 2 weist einen Stator 12 und einen drehbar gelagerten Rotor 14 auf, welcher drehfest mit einer Antriebswelle 10 verbunden ist. Die Antriebswelle 10 ist wiederum drehfest mit einem Propeller 11 verbunden. Mittels einer Zwischenwand 16 ist der Elektromotor 2 vom Hohlraum 3 abgetrennt.

Der Hohlraum 3 umschließt die Antriebswelle 10 vollständig in Umfangsrichtung und ist über zwei Gehäuseöffnungen 5 für den Gondelantrieb umgebendes Wasser zugänglich, wobei eine der beiden Gehäuseöffnungen 5 oben und die andere unten im Gondelgehäuse 1 angeordnet ist. Da der Hohlraum 3 mittels einer Trennwand 18 von der Antriebswelle 10 abgetrennt ist, wird verhindert, dass die Antriebswelle 10 mit dem im Hohlraum 3 befindlichen Wasser in Kontakt kommt. Der im Hohlraum 3 angeordnete Wärmetauscher 6 ist beispielsweise derart ausgestaltet, dass er die Antriebswelle 10 in Umfangsrichtung vollständig umschließt.

Der geschlossene Kühlkreislauf 7 weist Statorkanäle 13 auf, welche zumindest abschnittsweise am Stator 12 anliegen und/oder im Stator 12 angeordnet sind.

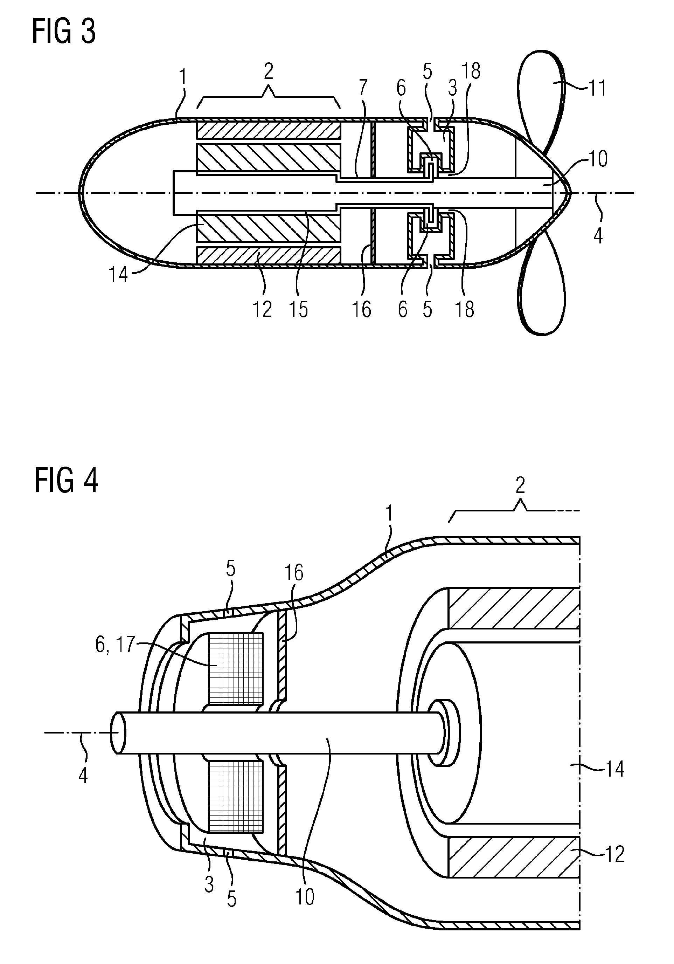

Figur 3 zeigt ein drittes Ausführungsbeispiel des erfindungsgemäßen elektrischen Gondelantriebs.

Im Unterschied zum zweiten Ausführungsbeispiel weist der geschlossene Kühlkreislauf 7 des Gondelantriebs gemäß dem dritten Ausführungsbeispiel Rotorkanäle 15 auf, welche zumindest abschnittsweise am Rotor 14 anliegen und/oder im Rotor 14 angeordnet sind. Dabei ist der Wärmetauscher 6 drehfest mit der Antriebswelle 10 verbunden.

Prinzipiell kann der elektrische Gondelantrieb auch derart ausgestaltet sein, dass sowohl Statorkanäle 13 gemäß dem zweiten Ausführungsbeispiel als auch Rotorkanäle 15 gemäß dem vorliegenden, dritten Ausführungsbeispiel vorgesehen sind. Denkbar ist auch, für die Statorkanäle 13 und Rotorkanäle 15 separate, geschlossene Kühlkreisläufe 7 mit zumindest einem jeweiligen Wärmetauscher 6 vorzusehen.

Figur 4 zeigt ein viertes Ausführungsbeispiel des erfindungsgemäßen elektrischen Gondelantriebs, wobei lediglich ein Ausschnitt dargestellt ist. Der Wärmetauscher 6 verfügt über Rohre 17, wobei der Hohlraum 3 und die Rohre 10 die Antriebswelle 10 in Umfangsrichtung vollständig umschließen. Beispielsweise kann ein derartiger Wärmetauscher 6 in einem der zuvor dargestellten Ausführungsbeispiele eingesetzt werden.

Zusammenfassend betrifft die Erfindung einen elektrischen Gondelantrieb für ein Schiff aufweisend ein Gondelgehäuse, welches drehbar mit einem Schiffsrumpf verbindbar ist, und einen im Gondelgehäuse angeordneten Elektromotor. Ferner betrifft die Erfindung ein Schiff aufweisend einen derartigen elektrischen Gondelantrieb. Um eine alternative Kühlung für einen elektrischen Gondelantrieb bereitzustellen, wird vorgeschlagen, dass der elektrische Gondelantrieb zumindest einen im Gondelgehäuse angeordneten Hohlraum, wobei der zumindest eine Hohlraum jeweils bezüglich einer Motorachse in axialer Richtung versetzt zum Elektromotor angeordnet ist und wobei der zumindest eine Hohlraum derart ausgestaltet ist, dass durch zumindest eine Gehäuseöffnung Wasser in den zumindest einen Hohlraum eindringen kann, welches den Gondelantrieb zumindest teilweise umgibt, zumindest einen Wärmetauscher, welcher jeweils im zumindest einen Hohlraum angeordnet ist, und einen geschlossenen Kühlkreislauf aufweist, welcher im Gondelgehäuse verläuft, wobei der geschlossene Kühlkreislauf derart ausgestaltet ist, dass Abwärme des Elektromotors über ein im geschlossenen Kühlkreislauf zirkulierendes Kühlmedium aufnehmbar ist und mittels des zumindest einen Wärmetauschers an das im zumindest einen Hohlraum befindliche Wasser abgebbar ist.

## Patentansprüche

1. Elektrischer Gondelantrieb für ein Schiff aufweisend
- ein Gondelgehäuse (1), welches drehbar mit einem Schiffsrumpf verbindbar ist, und
- einen im Gondelgehäuse (1) angeordneten Elektromotor (2), **gekennzeichnet durch**
- zumindest einen im Gondelgehäuse (1) angeordneten Hohlraum (3),
wobei der zumindest eine Hohlraum (3) jeweils bezüglich einer Motorachse (4) in axialer Richtung versetzt zum Elektromotor (2) angeordnet ist und
wobei der zumindest eine Hohlraum (3) derart ausgestaltet ist, dass **durch** zumindest eine Gehäuseöffnung (5) Wasser in den zumindest einen Hohlraum (3) eindringen kann, welches den Gondelantrieb zumindest teilweise umgibt,
- zumindest einen Wärmetauscher (6), welcher jeweils im zumindest einen Hohlraum (3) angeordnet ist, und
- einen geschlossenen Kühlkreislauf (7), welcher im Gondelgehäuse (1) verläuft,
wobei der geschlossene Kühlkreislauf (7) derart ausgestaltet ist, dass Abwärme des Elektromotors (2) über ein im geschlossenen Kühlkreislauf (7) zirkulierendes Kühlmedium aufnehmbar ist und mittels des zumindest einen Wärmetauschers (6) an das im zumindest einen Hohlraum (3) befindliche Wasser abgebbar ist.

2. Elektrischer Gondelantrieb nach Anspruch 1,
wobei der jeweilige Hohlraum (3) zwischen einer jeweiligen axialen Stirnseite (8) des Elektromotors (2) und einer jeweiligen axialen Stirnseite (9) des Gondelgehäuses (1) angeordnet ist, in welche die jeweilige axiale Stirnseite (8) des Elektromotors (2) weist.

3. Elektrischer Gondelantrieb nach einem der vorhergehenden Ansprüche,
wobei der elektrische Gondelantrieb eine Antriebswelle (10) und einen drehfest mit der Antriebswelle (10) verbundenen Propeller (11) aufweist,
wobei der jeweilige Hohlraum (3) die jeweilige Antriebswelle (10) in Umfangsrichtung zumindest entlang des halben Umfangs umschließt.

4. Elektrischer Gondelantrieb nach Anspruch 3,
wobei der Wärmetauscher (6) zumindest ein Rohr (17) aufweist, welches die Antriebswelle (10) in Umfangsrichtung jeweils vollständig umschließt.

5. Elektrischer Gondelantrieb nach einem der vorhergehenden Ansprüche,
wobei der Elektromotor (2) einen Stator (12) aufweist,
wobei der geschlossene Kühlkreislauf (7) zumindest einen Statorkanal (13) umfasst, welcher jeweils zumindest abschnittsweise am Stator (12) anliegt und/oder jeweils zumindest abschnittsweise im Stator (12) angeordnet ist.

6. Elektrischer Gondelantrieb nach einem der vorhergehenden Ansprüche,
wobei der Elektromotor (2) einen drehbar gelagerten Rotor (14) und eine drehfest mit dem Rotor (14) verbundene Antriebswelle (10) aufweist,
wobei der geschlossene Kühlkreislauf (7) zumindest einen Rotorkanal (15) umfasst, welcher jeweils zumindest abschnittsweise am Rotor (14) anliegt und/oder jeweils zumindest abschnittsweise im Rotor (14) angeordnet ist, und
wobei der jeweilige Wärmetauscher (6) drehfest mit der Antriebswelle (10) verbunden ist.

7. Schiff aufweisend zumindest einen elektrischen Gondelantrieb nach einem der vorhergehenden Ansprüche.
